# EUROPEAN PATENT APPLICATION

(11) **EP 4 169 478 A1**
(43) Date of publication of application: **26.04.2023**
(21) Application number: 22826046.9
(22) Date of filing: 08.04.2022
(51) Int. Cl.: A61C 8/00

(54) **IMPLANT ABUTMENT COMPRISING CAP WITH REINFORCED BINDING FORCE WITH ARTIFICIAL TOOTH**

(30) Priority: 26.07.2021 KR 20210097972
(71) Applicant: Jang, Cheon Seok, Ansan-si, Gyeonggi-do 15484 (KR)
(72) Inventor: Jang, Cheon Seok, Ansan-si, Gyeonggi-do 15484 (KR)
(74) Representative: Cabinet Chaillot
(86) International application number: PCT/KR2022/005095
(87) International publication number: WO 2023/008685

(57) **Abstract**

An abutment for implant including a cap with a strengthened occlusal force with an artificial tooth according to the present invention includes: a base having a coupling hole with a screw thread formed in a height direction; and a cap including a cap body that is threaded with the base and a cap head that is located on an upper portion of the cap body and exposed to the upper portion of the base and has a larger diameter than the cap body.

According to the abutment for implant including a cap with strengthened occlusal force with an artificial tooth according to according to the present invention, by providing the abutment in a double coupling structure and providing a cap capable of adjusting or increasing an area of the upper coupling portion, it is possible to ensure a tight coupling relationship with the artificial tooth.

## Description

### [Technical Field]

The present invention relates to an abutment for implant including a cap with a strengthened occlusal force with an artificial tooth, and more particularly, to an abutment for implant capable of ensuring a tight coupling relationship between an artificial tooth and a cap without an unnecessary clearance or gap by coupling the cap coupled with the artificial tooth, which may have an irregular inner side surface during manufacturing, to be exposed at an upper coupling portion of a base.

### [Background Art]

An implant is made of a strong and biocompatible material such as titanium, and is a treatment method of restoring a lost tooth by implanting the material in a gum bone of a portion of the lost tooth and installing an artificial tooth on the material. The implant is a treatment method and structure capable of restoring a form and function similar to natural teeth.

In general, the implant may be composed of an artificial tooth, an abutment, and a fixture. The fixture is a part inserted and fixed into the gum bone, and the abutment is connected to the fixture, and the artificial tooth is placed in an oral cavity while partially covering the abutment.

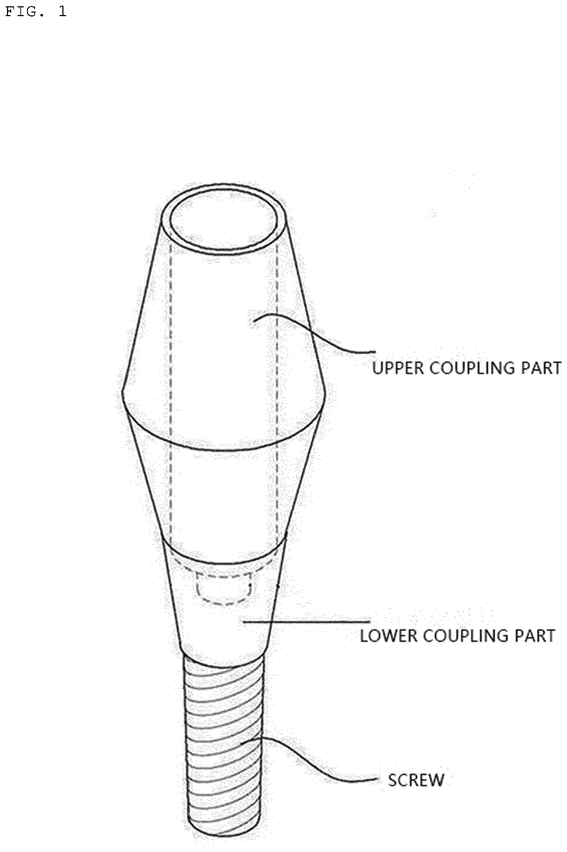

FIG. 1 is a conceptual diagram illustrating a schematic structure of the known abutment.

As can be seen from Figure 1, a typical abutment has a structure in which a lower coupling portion for coupling with a fixture and an upper coupling portion for coupling with an artificial tooth are three-dimensionally formed.

FIG. 1 illustrates a structure in which a screw and an abutment body are integrally coupled, that is, a one-piece type abutment. In addition to this structure, a structure in which a screw and an abutment are separated, that is, a two-piece type (dual abutment) is also present.

In general, an abutment made of metal have a smooth surface because it is manufactured with precision work by a CNC machine or the like. However, an artificial tooth is often manufactured with manual processes, so the surface of the artificial tooth is not as smooth as the surface of the abutment and has a fine curve or a tolerance, which may cause a problem in which the inner side surface of the artificial tooth and the outer surface side of the upper coupling portion in the abutment are not tightly coupled.

Furthermore, it may be necessary to maintain a tight coupling relationship with the artificial tooth by necessarily increasing a contact area where the upper coupling portion of the abutment comes into contact with the artificial tooth. In the abutment of FIG. 1, the upper coupling portion provides only a fixed area, which may not provide a means to solve the above problems.

Korean Patent No. 1669893 discloses a double-structured abutment for implant including a first abutment that is fixed to an alveolar bone and a gum, and partially protrudes higher than the gum, a second abutment that is connected to the protruding first abutment to abut to the gum and has a through hole in a center thereof, and a coupling part that is inserted into the through hole to couple the first and second abutments, thereby providing the advantage of easy maintenance of the implant while providing the abutment in a double prefabricated structure.

However, this technology simply provides only the characteristics that the abutment is provided in the prefabricated double structure, and does not provide the purpose of increasing the contact area of the portion in contact with the artificial tooth or a means to solve these problems.

Therefore, there is a need to develop a new and advanced abutment that not only provides convenience in manufacturing and maintenance, but also increases a contact area with an artificial tooth by providing an abutment in a prefabricated structure to ensure a tight coupling relationship with the artificial tooth.

### [Disclosure]

### [Technical Problem]

The present invention provides an abutment capable of increasing an occlusal force with an artificial tooth by coupling a cap on an upper portion of a base serving as a body of the abutment in a prefabricating way and processing a shape of an outer circumferential surface of the cap in various ways.

Another object of the present invention is to increase a contact area with an artificial tooth while reliably preventing the artificial tooth from separating by processing an exposed outer circumferential surface of a cap into a reverse tapered shape in which an upper portion of the exposed outer circumferential surface of the cap is wide and a lower portion thereof is narrow.

Still another object of the present invention is to further couple a stabilizer between a cap and an artificial tooth to strengthen a tight close coupling relationship with the artificial tooth.

Still yet another object of the present invention is to further strengthen a tight coupling relationship with an artificial tooth by forming protrusions and grooves of a unique structure on an exposed outer circumferential surface of a cap to appropriately correspond to a curved inner side surface shape of the artificial tooth.

### [Technical Solution]

According to the present invention, an abutment for implant including a cap with a strengthened occlusal force with an artificial tooth includes: a base having a coupling hole with a screw thread formed in a height direction; and a cap including a cap body that is threaded with the base and a cap head that is located on an upper portion of the cap body and exposed to the upper portion of the base and has a larger diameter than the cap body.

In addition, the cap head may have an inverted truncated cone shape and has a cap taper surface tapered to be wide at an upper portion and narrow at a lower portion.

The abutment for implant may include a stabilizer having a through hole fitted to an outer circumferential surface of the cap head while having a diameter corresponding to that of the cap head.

### [Advantageous Effects]

According to an abutment for implant including a cap with strengthened occlusal force with an artificial tooth according to the present invention,
1) by providing the abutment in a double coupling structure and providing a cap capable of adjusting or increasing an area of the upper coupling portion, it is possible to ensure a tight coupling relationship with the artificial tooth,
2) by tapering an exposed outer circumferential surface of a cap so that an upper portion of the exposed outer circumferential surface of the cap is wide and a lower portion thereof is narrow, it is possible to reliably prevent the artificial tooth from unnecessarily moving or separating,
3) it is possible to ensure a tighter coupling relationship with the artificial tooth through a stabilizer, and
4) by coupling the cap to a base through a connector, it is possible to ensure the overall durability of the abutment.

### [BRIEF DESCRIPTION OF THE DRAWINGS]

FIG. 1 is a conceptual diagram illustrating a known abutment.
FIG. 2 is a cross-sectional view illustrating a basic structure of a base and a cap of the present invention.
FIG. 3 is a conceptual diagram illustrating the base and the cap having an inverted truncated cone or cylindrical shape of the present invention.
FIG. 4 is a flowchart illustrating a process of coupling an abutment including the cap of the present invention with an artificial tooth and a fixture.
FIG. 5 is a cross-sectional view and a partially enlarged view illustrating a structure in which the abutment of the present invention includes a stabilizer.
FIG. 6 is a conceptual view illustrating a structure in which a protrusion and a groove are formed in a cap head of the cap.
FIG. 7 is a cross-sectional view illustrating a structure in which the abutment of the present invention further includes a connector.
FIG. 8 is a cross-sectional view illustrating a structure in which the abutment of the present invention includes a modified embodiment of the connector.

### [Best Mode]

Hereinafter, exemplary embodiments of the present invention will be described with reference to the accompanying drawings. The accompanying drawings are not drawn to scale, and like reference numbers in each drawing indicate like elements.

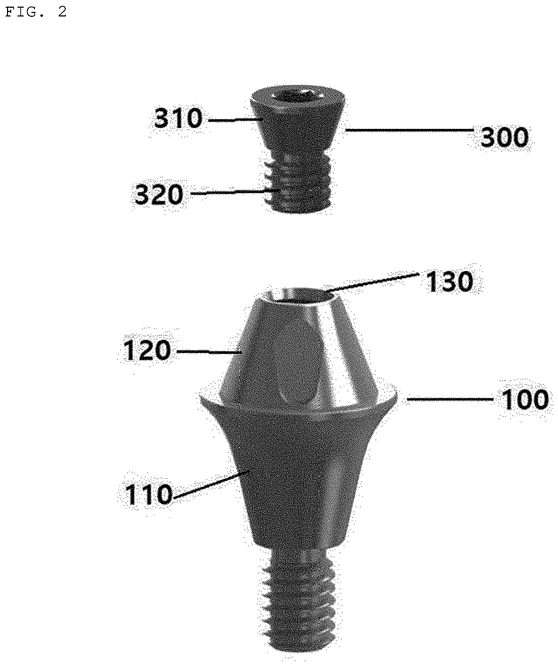

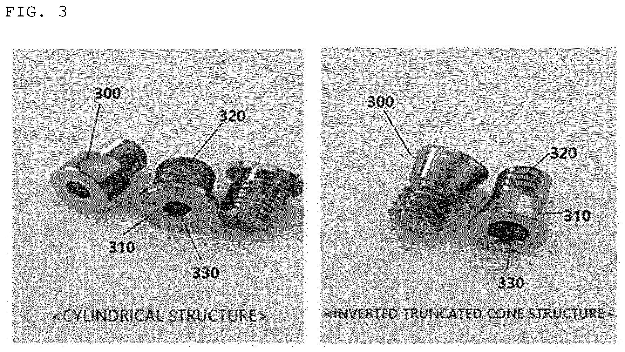

FIG. 2 is a cross-sectional view illustrating a basic structure of a base and a cap of the present invention, and FIG. 3 is a conceptual diagram illustrating the base and the cap having an inverted truncated cone or cylindrical shape of the present invention.

As can be seen from FIG. 2, an abutment 10 of the present invention is based on a structure including a base 100 and a cap 300.

The base 100 of the present invention has a structure and shape similar to a known abutment, and includes a lower coupling portion 110 that is coupled with a fixture 2 and an upper coupling portion 120 that is located on an upper portion of the lower coupling portion 110 and coupled with an artificial tooth 1.

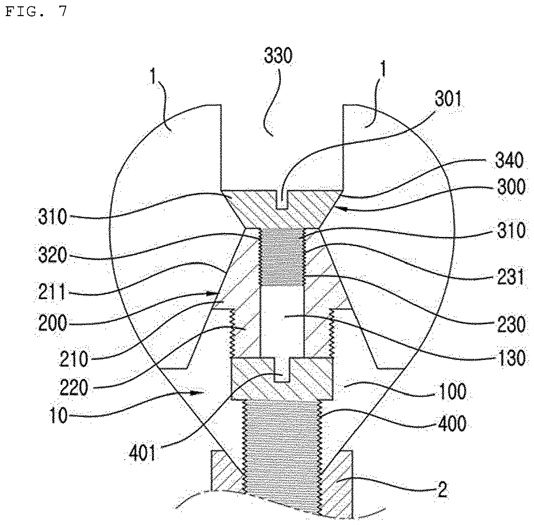

That is, the base 100 is similar to the known abutment having an upper portion/lower coupling portion and is not limited to a specific shape and structure. However, the base 100 preferably has a lower structure than a height of the upper coupling portion of the known abutment in consideration of a coupling structure with the cap 300 (furthermore, a connector of FIG. 7) to be described later.

In other words, in the base 100 coupled with the cap 300, the upper coupling portion 120 is lower than the height of the lower coupling portion 110, so it is possible to prevent the total height of the cap 300 and the upper coupling portion 120 from being unnecessarily raised while the cap 300 is coupled to be exposed to the upper portion of the upper coupling portion 120 of the base 100.

The base 100 is provided with a coupling hole 130 having a screw thread formed along a height direction of the center portion.

The coupling hole 130 is similar to a screw hole of the known abutment that provides a space into which the screw 400 is inserted in order to couple the known fixture 2 and the screw 400, but in the present invention, in particular, the coupling hole 130 has a function of providing a space in which not only the screw 400 but also the cap 200 to be described later is accommodated. In this case, a screw thread is formed in a portion of the coupling hole 130, that is, an upper portion to which the cap 300 is fastened, so the coupling hole 130 may be threaded with the cap 300.

This coupling hole 130 is recessed along the height direction of the central portion in the base 100 based on the one-piece type abutment structure as illustrated in FIG. 1, and may be penetrated along the height direction of the central portion in through in the base 100 based on the two-piece type abutment structure. That is, the coupling hole 130 may have both a shape and structure that is recessed and penetrated. In other words, the coupling hole 130 is not limited to any one shape.

The cap 300 of the present invention is threaded with the above-described coupling hole 130 of the base 100 in a state of being made of a metal material (the same material as or similar to a general abutment), and largely includes a cap body 320 and a cap head 310.

The cap body 320 is a portion where a screw thread is formed on the outer circumferential surface for being threaded with the coupling hole 130, and the cap head 310 is formed on the upper portion of the cap body 320. In other words, the cap body 320 is a portion exposed to the upper portion of the base 100 when the cap 300 is coupled with the coupling hole 130 of the base 100.

In particular, the cap head 310 has a larger diameter than that of the cap body 320.

That is, the cap 300 includes the cap head 310 and the cap body 320, and is exposed to the outer portion (upper portion) of the base 100 while the cap head 210 is coupled to the coupling hole 130. The exposed portion (exposed outer circumferential surface which may be mainly referred to as a side surface) of the cap head 310 becomes a portion that is substantially coupled with an artificial tooth, that is, provides a coupling area.

In addition, a cap hole 330 (driver groove or screw groove into which a coupling tool such as a screwdriver is coupled) may be formed on the upper surface of the cap head 210 to be threaded with the coupling hole 130 of the base 100. The cap hole 330 is basically recessed to a certain depth in the upper surface of the cap head 310 itself.

Also, as can be seen from FIG. 3, the cap head 310 of the cap 300 may have a shape similar to a cylindrical shape or an inverted truncated cone.

The cap 300 having the cap head 310 having the cylindrical shape has a shape similar to a thumbtack as a whole, and the cap 300 having the cap head 310 having the shape of the inverted truncated cone has a shape similar to a funnel as a whole.

In this case, the cap head 310 having the inverted truncated cone shape includes a cap taper surface 340 tapered to be wide at an upper portion and narrow at a lower portion due to the structural characteristics of the inverted truncated cone shape.

Specifically, an inner side surface of an artificial tooth 1 may generally have a curved shape rather than a completely flat shape, that is, a three-dimensional shape including a tolerance in consideration of a manufacturing situation that artificial teeth are made manually. In particular, the lower portion of the artificial tooth 1 is rounded or has a curved portion.

In the past, when the upper coupling portion of the known abutment comes into contact with the curved lower portion of the artificial tooth 1, this contact portion is lifted or has an unnecessary clearance, so it does not come into close contact with the artificial tooth and frequently provides unstable occlusal force.

However, the cap head 310 of the cap 300 of the present invention protrudes to the upper portion of the base 100 and provides a larger area than the upper coupling portion of the known abutment to increase the coupling area with the artificial tooth 1.

Specifically, the cap head 310 having a cylindrical shape may increase the occlusal force with the artificial tooth 1 while efficiently pressing the lower portion of the three-dimensional artificial tooth 1 with a relatively large diameter to bring the artificial tooth 1 into close contact, and due to the structural feature that the inverted truncated cone-shaped cap head 310 includes a cap taper surface 340 tapered so that a width increases upwards from the lower portion of the artificial tooth 1, it is possible to reliably solve the problem the artificial tooth 1 (as a general artificial tooth, it is of course possible to apply an artificial tooth redesigned to have a structure corresponding to the cap taper surface of the cap) having an inner side surface having an inclination angle corresponding to the cap taper surface 340 moves upwards or separated, and it is possible to bring the artificial tooth 1 into close contact by increasing a coupling area with the artificial tooth 1 having a three-dimensional shape.

In summary, the abutment 10 including the cap 300 of the present invention provides a larger area due to the securing of the cap (particularly, the head) than the upper coupling portion of the known abutment, thereby increasing the coupling area with the artificial tooth 1. As a result, the abutment 10 including the cap 300 may increase the occlusal force with the artificial tooth 1, reduce the manufacturing cost compared to the case where the area of the upper coupling portion is increased in the known abutment composed of a single body, and provide convenience of maintenance.

In addition, similar to the known abutment, the cap 300 of the present invention may be made of titanium, but more preferably, the cap 300 may be made of nitinol.

Nitinol is also called nickel titanium, and is a nonmagnetic alloy containing half nickel and half titanium.

This alloy material has the property of returning to its original shape when heated above a certain temperature or immersed in water, even if it is deformed such as being crushed after being commercialized. The nitinol is also called shape memory superelastic alloy.

Describing the superelastic alloy here, when a deformation force is applied to the superelastic alloy, the superelastic alloy undergoes initial elastic deformation followed by yielding like other materials. However, when the deformation force is lowered, the elastic deformation is not only recovered, but also shows the opposite phenomenon to the yield phenomenon under load, which refers to a material that recovers a large deformation strain to its original state while maintaining a constant stress value.

In other words, the superelasticity phenomenon refers to a phenomenon in which the amount of deformation in elastic deformation in which stress and strain are proportional is not large, and the apparent plastic deformation exceeding the yield point is recovered like rubber.

This is closely related to the transformation of stress induced martensite, which is due to the transformation to martensite when stress is applied to nitinol in an austenite phase at a temperature equal to or higher than an inverse transformation temperature.

The reason why such stress induced martensite is generated is that when the stress is applied from the outside, a phase equilibrium temperature between a parent phase (austenite phase) and a martensite phase rises, making the martensite phase thermodynamically more stable, and when the stress is removed, the equilibrium temperature is lowered and returns to the parent phase.

Therefore, the superelasticity may be exhibited at a temperature equal to or higher than the reverse transformation temperature, and in the case of the nitinol, the superelasticity may be exhibited even at body temperature due to the low reverse transformation temperature.

In addition, the nitinol is known to exhibit properties similar to human tissue, such as high human body compatibility, superelasticity, and absorption, and is known that it has excellent strength and resistance to corrosion, and thus, has little risk of fracture and the low risk of corrosion in vivo.

Therefore, the cap 300, which plays a pivotal role in increasing the occlusal force with the artificial tooth 1 by being coupled with the base 100, is made of nitinol, so the cap 300 itself as well as the overall elasticity of the abutment 10 may be enhanced based on the above-described human body compatibility, corrosion resistance, and superelasticity of nitinol.

Based on this principle, when the cap 300 is rotated into the coupling hole 130 of the base 100 by a coupling tool, the screw thread of the cap body 310 is partially deformed by a repulsive force generated when it is coupled with the coupling hole 130 of the base 100, so the transformation from the parent phase austenite to the martensite phase occurs.

However, in this state, if the occlusal force applied through the coupling tool is removed, the martensite phase returns to the austenite phase, and thus, the shape partially deformed by the superelasticity returns to the original shape and is firmly coupled. In this case, it is possible to provide characteristics in which a phenomenon in which the cap 300 is separated from the base 100 is reduced even during repeated masticatory motions due to a stronger fastening.

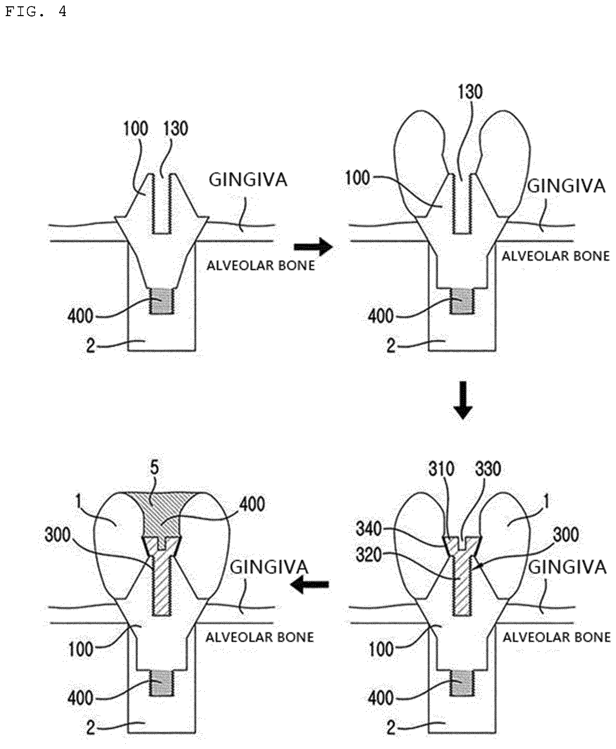

FIG. 4 is a flowchart illustrating a process of coupling the abutment including the cap of the present invention with an artificial tooth and a fixture.

FIG. 4 is a diagram schematically illustrating the entire process of implanting the abutment 10 (one-piece type abutment) including the cap 300 and the base 100 of the present invention into an alveolar bone together with the screw 400 and the fixture 2 which may be regarded as a basic configuration.

Specifically, first, the fixture 2 is implanted into the alveolar bone, the screw 400 formed at the lower portion of the base 100 is inserted into the hole (hole with a screw hole) of the fixture 2, and then both the screw 400 and the hole of the fixture 2 are threaded to fixedly couple the base 100 with the fixture 2.

This process may be performed in the same or similar order except for the process of inserting the screw into the coupling hole 130 of the base 100 in the abutment having a separable screw, that is, the dual abutment.

Thereafter, the artificial tooth 1 is seated on the upper coupling portion 120 of the base 100. In this case, the central portion of the artificial tooth 1 is not clogged but has an opened groove state. As a result, after the artificial tooth 1 is seated on the base 100, when the cap 300 is rotationally coupled with the base 100 through the coupling tool, the artificial tooth 1 may also be engaged and coupled at the same time.

That is, after the artificial tooth 1 is seated on the upper coupling portion 120 of the base 100, the cap 300 is inserted into the coupling hole 130 of the base 100 through the groove of the artificial tooth 1, and is threaded through a coupling tool such as a screwdriver. In the process of rotating the cap 300 through the coupling tool, as described above, the outer circumferential surface of the cap head 310, which is the exposed portion of the cap 300, closely adheres to the artificial tooth 1 to engage with the artificial tooth 1 while maintaining close contact with the curved portion, that is, the three-dimensional lower portion and other parts of the artificial tooth 1.

Finally, when the cap 300 is coupled with the coupling hole 130, the artificial tooth 1 also maintains the close contact state with the outer circumferential surface of the cap head 310 in the cap 300, resulting in maintaining the strengthened coupling relationship between the abutment 10 of the present invention and the artificial tooth 1.

Finally, the implant manufacturing (prosthetic) process may be completed by filling the groove of the artificial tooth 1 with a filler 5 such as resin.

That is, it may be easy to understand the coupling relationship and coupling sequence between the artificial tooth 1, the base 100, the cap 300 and the screw 400, and the fixture 2 through the implant prosthesis process illustrated in FIG. 4 and the above description thereof.

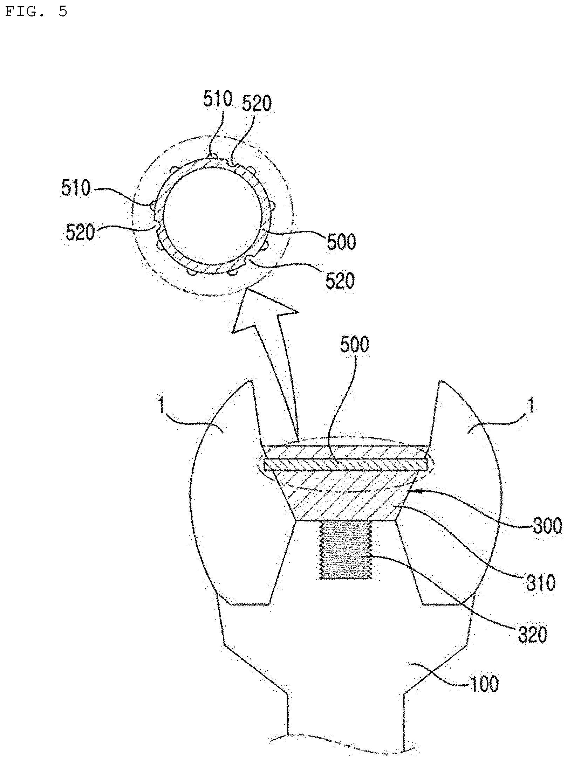

FIG. 5 is a cross-sectional view and a partially enlarged view illustrating a structure in which the abutment of the present invention includes a stabilizer.

In current practice, a process of coupling the abutment with the artificial tooth without using an adhesive is mainly applied. In this case, a fine gap or clearance may occur between the abutment and the inner side surface of the artificial tooth 1.

In order to solve this problem, the present inventors have designed the structure to closely contact the inner side surface of the artificial tooth 1 while sufficiently securing the area of the cap head 310 described above. However, in general, the cap 300 made of a metal material has a smooth surface because it is manufactured by precision work using a CNC machine or the like, but the artificial tooth 1 is not infrequently manufactured through a manual process such as a wax-up process, so that its surface is not as smooth as the surface of the cap 300, and fine curves or tolerances may occur. As a result, when the cap 300 inserted into the coupling hole 130 of the base 100, that is, the cap head 310, is rotated and fixed through the coupling tool, the surface of a portion of the inner side surface of the artificial tooth 1 in contact with the outer circumferential surface of the cap head 310 is irregular, so there is a possibility that only a specific portion first comes into contact with the outer circumferential surface of the cap 300 and other portion do not come into contact with the outer circumferential surface of the cap 300.

In this case, when the occlusal force is applied, a force is not uniformly dispersed, so the artificial tooth 1 may be fractured or the cap 300 may be released from the base 100 or broken.

In order to more reliably solve this problem, a portion that does not contact between the outer circumferential surface of the cap head 310 described above and the inner side surface of the artificial tooth 1 is predicted (the position of the corresponding outer circumferential surface of the head through a dimensioning machine, etc., is determined), so it is possible to fit the stabilizer 500 into the corresponding outer circumferential surface of the cap head 310.

The stabilizer 500 is a structure in which a through hole (an open portion in the central portion of the stabilizer) into which the outer circumferential surface of the cap head 310 may be fitted is formed to penetrate through the central portion.

The stabilizer 500 for the cap head 310 having the cylindrical shape is formed in a ring shape, and the stabilizer 500 for the cap head 310 having the inverted truncated cone shape takes a shape obtained by cutting the inverted truncated cone in a horizontal direction to fit the shape of the corresponding cap head 310. In other words, the through hole of the stabilizer 500, particularly, the through hole extends to an inclination angle corresponding to the inclination angle of the outer circumferential surface (specifically, the cap taper surface) of the cap head 310.

In addition, the outer circumferential surface of the stabilizer 500 having the inverted truncated cone shape cap head 310 may extend vertically from the upper surface of the cap head 310 as illustrated in FIG. 5, but may also extend obliquely parallel to the inner circumferential surface.

The stabilizer 500 may have various thicknesses and heights according to irregular inner side surface shapes of the artificial tooth 1. That is, as illustrated in FIG. 5, the stabilizer 500 may take a thin strip shape, as well as a higher height or thicker thickness than this.

The stabilizer 500 may be made of an engineering plastic material including metal materials such as PTFE, titanium, and nitinol, and may be made of a material having stretchability or elasticity as well as a hard material.

The stabilizer 500 may ensure the uniform contact between the outer circumferential surface of the cap head 310 and the inner side surface of the artificial tooth 1 to maintain a stable coupling state thereof, buffer an external force when the occlusal force is applied to the artificial tooth 1 and the external force that is out of alignment with the direction of occlusion is generated between the artificial tooth 1 and the abutment 10, and as a result, prevent a phenomenon in which the cap 300 is easily separated from the base 100 due to fracture of the cap 300 or increased instability of the cap 300.

Furthermore, as can be seen from the partially enlarged view of FIG. 5, a plurality of protrusions 510 may be formed on the outer circumferential surface of the stabilizer 500 at regular intervals along the circumferential direction.

As described above, the plurality of protrusions 510 may be formed at the position of the stabilizer 500 corresponding to the irregular inner circumferential surface shape of the artificial tooth 1, and thus, provide performance capable of filling or buffering a fine clearance between the stabilizer 500 and the artificial tooth 1.

In this case, the pattern of the protrusion 510 is not formally determined, but may be set to various heights and distances according to the shape of the artificial tooth 1.

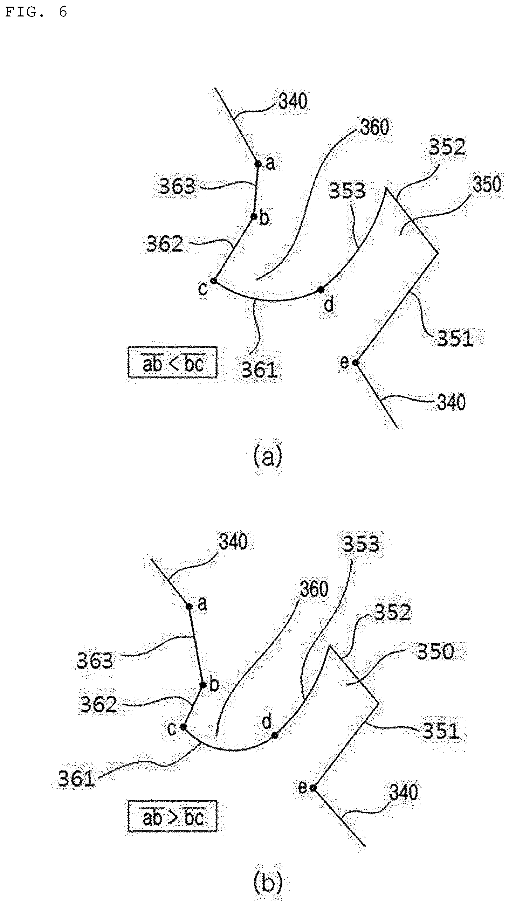

FIG. 6 is a conceptual view illustrating a structure in which the protrusion and the groove are formed in the cap head of the cap.

According to the embodiment illustrated in FIG. 6, in the structure in which the cap head 310 has the inverted truncated cone shape without the above-described stabilizer 500 and includes the cap taper surface 340 tapered to be wide at the upper portion and narrow at the lower portion, a structure in which the plurality of protrusions 350 are formed on the outer circumferential surface of the cap head 310, that is, on the cap taper surface 340, and grooves 360 recessed at a certain depth are formed between these protrusions 350 is illustrated.

That is, since it is to provide the outer circumferential surface of the cap head 310 with the same function as the protrusion 510 of the stabilizer 500 described above, not only the protrusion 510 but also the groove 520 are disposed, and thus, the outer circumferential surface of the cap head 310 has a curved concavo-convex shape to more efficiently correspond to various irregular shapes of artificial teeth, so the close contact and coupling relationship between the cap 300 and the artificial tooth 1 may be ensured/maintained.

The protrusion 350 and the groove 360 may take various patterns according to the irregular shape of the artificial tooth 1. For example, the height of the protrusion 350 and the depth of the groove 360 may be the same or different, and the number of protrusions 350 and grooves 360 may also be the same or different.

Furthermore, the embodiment according to FIG. 6 further suggests the shapes of the protrusion 350 and the groove 360 that may be commonly and usefully applied to various shapes of artificial teeth.

Specifically, it can be seen that the protrusion 350 and the groove 360 according to FIG. 6A are continuously connected without being spaced apart from each other.

In this case, the longitudinal cross-sectional shape of the protrusion 350 and the groove 360 takes a unique shape, which will be described in detail. In FIG. 6A, the "direction in an upper portion" of the cap head 310 means the upper portion side of the cap taper surface 340, that is, the direction of the upper portion in the drawing.

First, the longitudinal cross-sectional shape of the protrusion 350 includes a first inclined part 351 inclined in the direction of the upper portion of the cap head 310, a parallel extension 352 that extends from the first inclined part 351 in the direction of the upper portion of the cap head 310 parallel to the cap taper surface 340, and a second inclined part 353 that extends to be rounded in the direction of the first inclined part 351 from the parallel extension 352 to the cap taper surface 340.

Accordingly, the longitudinal cross-sectional shape of the groove 360 includes a first extension 361 that extends to be rounded with the same curvature as the second inclined part 353 of the protrusion 350, a second extension 362 that obliquely extends from the first extension 361 in the direction of the upper portion of the cap head 310, and a third extension 363 that obliquely extends from the second extension 362 to the cap taper surface 340 in the direction of the upper portion of the cap head 310 with a longer length than the second extension 361.

According to this structure, since the protrusion 350 takes a shape directed in the direction of the upper portion of the cap head 310, the protrusion 350 reduces the sinking of the artificial tooth 1 in the direction of gravity by contacting the artificial tooth 1 just as the protrusion pushes the coupled portion of the artificial tooth 1 in the opposite direction to the direction of gravity, and has a rounding shape of the second inclined part 352 and maintains tension on the side of the relatively long and concavely curved second inclined part 352 while strengthening property directed in the opposite direction of the direction of gravity of the protrusion 350.

In addition, the groove 360 provides a space for absorbing a certain shock or stress generated when the artificial tooth 1 and the outer circumferential surface of the cap head 310 come into contact, and at the same time, the rounding structure of the first extension 361 has the same radius of curvature (degree of curvature) as that of the second inclined part 252, so the durability and tension of the second inclined part 252 may be maintained more strongly.

In addition, the third extension 363 may be referred to as a kind of chamfer portion obtained by cutting a corner of the groove 360, and may be processed shorter than the second extension 362 to primarily absorb the above-described shock and make the overall structure of the groove 360 direct to the upward direction of the cap head 310 to guide dust of the artificial tooth 1, which may occur when the artificial tooth 1 and the cap head 310 are coupled, to bounce outward.

In addition, the embodiment according to FIG. 6 (b) has almost the same structure as the embodiment of FIG. 6 (a), but has a difference in that the second extension 362 of the groove 360 has a shorter length than the third extension 363.

According to this structure, a function similar to that of the embodiment of FIG. 6A is provided, but a stable home space is provided between the first and second extensions 361 and 362 in the groove 360, and thus, may accommodate dust from the artificial tooth 1 that may occur when the artificial tooth 1 and the cap head 310 are coupled.

That is, the dust of the artificial tooth 1 does not fly far, but stays on the outer circumferential surface of the cap head 310 or the inner surface of the artificial tooth 1 in other portions to prevent the problem in that the coupling surface between the two is not smooth and irregularly bumpy.

The embodiment according to FIGS. 6A and 6B is sufficiently efficiently applied as long as the surface of the artificial tooth 1 is irregular no matter what shape the inner side surface of the artificial tooth 1 has, thereby securing the above-described advantages.

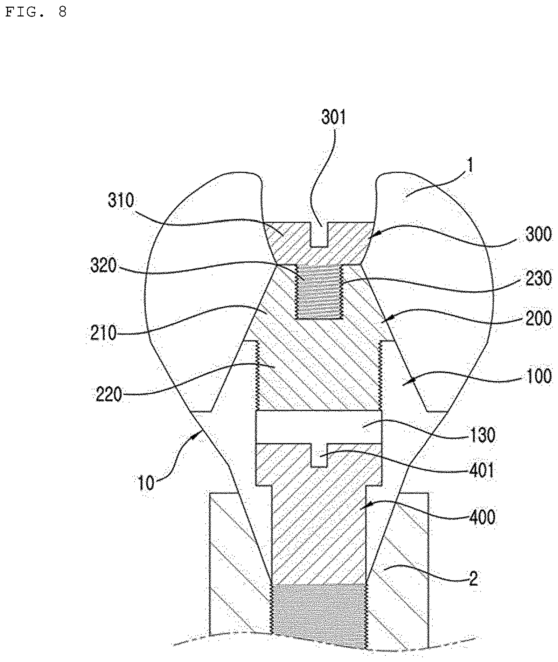

FIG. 7 is a cross-sectional view illustrating a structure in which the abutment of the present invention further includes a connector, and FIG. 8 is a cross-sectional view illustrating a structure in which the abutment of the present invention includes a modified embodiment of the connector.

In the above, it has been described that the abutment 10 of the present invention has the coupling structure of the base 100 and the cap 300, but the embodiments of FIGS. 7 and 8 further suggest a structure in which the cap 300 is coupled to the base 100 through the connector 200.

Specifically, in the embodiment of FIG. 7, the connector 200 and is accommodated in the coupling hole 130 while being threaded with the above-described coupling hole 130 of the base 100 while having a diameter corresponding to that of the coupling hole 130 of the base 100, and is provided with a cap accommodating hole 230 having a smaller diameter than the coupling hole 130 of the base 100 along the height direction of the central portion.

In FIG. 7, the cap accommodating hole 230 is shown as being penetrated, but is not necessarily limited thereto, and in order to provide a space capable of accommodating the cap 300, as illustrated in FIG. 8, it is possible to provide a cap accommodating hole 230' recessed by a depth corresponding to the height of the cap 300.

As illustrated in FIGS. 7 and 8, the connector 200 has a shape of a cone or a truncated cone as a whole to assist in lateral coupling with the artificial tooth 1, and as will be described later, the connector more preferably has a structure interlocked with the cap 300, that is, a ribbon structure to provide a strong occlusal force to the artificial tooth 1 together with the cap 30.

In this case, the connector 200 may be entirely accommodated in the coupling hole 130 of the base 100, but as illustrated in FIG. 7 or 8, it is preferable to take a structure in which a portion of the connector 200 is exposed to the upper portion of the base 100 in order to assist the above-described characteristic, that is, the side occlusal force with the artificial tooth 1.

Furthermore, the connector 200 may include a body 220 and a head 210.

The body 220 is a portion where a screw thread is formed on the outer circumferential surface for being threaded with the coupling hole 130, and the head 210 is formed on the upper portion of the body 220. The body 220 is a portion exposed to the upper portion of the base 100 when the connector 200 is coupled with the coupling hole 130 of the base 100.

In particular, the head 210 may have a larger diameter than the body 220.

That is, the head 210 is exposed to the outside in the state in which the connector 200 includes the head 210 and the body 220. Compared to the case where the connector 200 is entirely accommodated in the coupling hole 130, it is possible to provide an advantageous characteristic of easily providing the coupling area in which the outer circumferential surface of the connector 200 may be coupled with the artificial tooth 1, and the height of the upper coupling portion 120 of the base 100 is reduced more than the height of the lower coupling portion 110, so for the above reasons, it is possible to pursue structural stability that allows the head 210 of the connector 200 to easily provide a coupling area with an artificial tooth while lowering the height of the connector 200 itself.

In particular, the connector may be applied more usefully when the abutment 10 of the present invention is a dual type, that is, a structure in which the base 100 and the screw 400 are separated.

Specifically, the base 100 is fixed to the fixture 2 through a process in which the screw 400 is inserted through the coupling hole 130 of the base 100 and then coupled to the fixture 2. In this case, when applying a general screw 400 whose head diameter is greater than the diameter of the screw thread in the body, the diameter of the coupling hole 130 of the base 100, which may be referred to as an entry path of the screw 400, inevitably increases when the diameter of the head increases. In addition, when the diameter of the coupling hole 130 increases, the diameter of the cap head 310 inevitably increases while the diameter of the cap body 320 in the cap 300 located in the upper portion also increases. As such, when the diameter of the cap head 310 increases, the diameter of the coupling hole 130 formed on the upper surface of the base 100 also increases, resulting in poor aesthetics.

The connector 200 of the present invention is to solve this problem, and provides a role as a medium for easily coupling the cap 300 with the base 100 by inserting and fixing the connector 200 into the coupling hole 130, and at the same time, serves to secure aesthetics by reducing the diameter (size) of the coupling hole 130 formed on the upper surface of the base 100.

In other words, in order for the cap 300 to be inserted into the coupling hole 130 without the connector 200, the diameter of the coupling hole 130 needs to increase while the diameters of the cap head 310 and the cap body 320 increase together. On the other hand, when the connector 200 is inserted into the coupling hole 130, the diameters of the cap head 310 and the cap body 320 are reduced in proportion to the volume of the connector 200 itself, thereby reducing the diameter of the coupling hole 130 and solving the problem of poor aesthetics.

Furthermore, the outer circumferential surface of the head 210 exposed to the outside has the same or similar inclination angle as or to the tapered surface 121 of the upper coupling portion 120 on the base 100, so the head taper surface 211 that is tapered to be narrow at the upper portion and wide at the lower portion may be formed so that it may extend in a straight line without a step or a short edge (i.e. difference in an inclination angle).

Compared to the case where aesthetics are enhanced by forcibly reducing the diameter of the screw hole 230 of the abutment 10 as well as the screw 400 having a head having a larger diameter than the conventionally body having a screw thread, the abutment 10 of the present invention including the above-described connector 200 may efficiently prevent the problem of poor aesthetics due to unnecessarily large holes formed on the upper surface of the abutment 10 while ensuring structural stability and manufacturing convenience (compared to manufacturing a structure in which the connector is integrally combined with the base, manufacturing as a prefabricated method may pursue cost reduction such as mold production) of the abutment 10 as a whole.

Based on this structure, the cap 300 is coupled to the screw hole 230 of the head 210 at the connector 200 so as to be exposed to the upper portion of the head 210.

According to the structure in which the connector 200 is added in this way, the diameter of the screw 400 is reduced to enhance aesthetics, and unlike the structure in which the cap 300 is directly coupled to the base 100, since the connector 200, which plays a role similar to packing, is stably coupled as a medium, the overall structural stability of the abutment 10 may be pursued.

Furthermore, in order to increase the coupling area with the artificial tooth 1 and prevent the artificial tooth 1 from escaping upward, in the state in which the head taper surface 211 in which the outer circumferential surface of the head 210 is tapered to be wide at the upper portion and narrow at the lower portion to correspond to the tapered surface 121 of the upper coupling portion 120 is formed, as described above, the outer circumferential surface of the cap head 310 may be formed with the cap taper surface 340 that is tapered to be wide at the upper portion and narrow at the lower portion to be symmetrical (x-axis symmetry, which is an imaginary horizontal line) to the inclination angle of the head taper surface 211.

According to this structure, since the head 210 and the cap 300 of the connector 200 take a shape similar to that of a "ribbon" rotated 90°, the coupling area with the artificial tooth 1 increases as well as the problem of the artificial tooth 1 escaping in the upward direction is completely prevented due to the reverse taper structure of the cap 300 (inclination to spread upward), so it is possible to increase the occlusal force with the artificial tooth 1.

As described so far, the configuration and operation of the abutment for implant including the connector for reducing the diameter of the screw hole according to the present invention are described and illustrated in the above description and drawings, but this is only an example. Therefore, it goes without saying that the configuration and operation of the abutment for implant can be variously changed and modified without deviating from the technical spirit of the present invention.

## Claims

1. An abutment for implant including a cap with a strengthened occlusal force with an artificial tooth, comprising:
a base having a coupling hole with a screw thread formed in a height direction; and
a cap including a cap body that is threaded with the base and a cap head that is located on an upper portion of the cap body and exposed to the upper portion of the base and has a larger diameter than the cap body so as to directly contact an inner circumferential surface of the artificial tooth.

2. The abutment of claim 1, wherein the cap head has an inverted truncated cone shape and has a cap taper surface tapered to be wide at an upper portion and narrow at a lower portion.

3. The abutment of claim 1, comprising:
a stabilizer having a through hole fitted to an outer circumferential surface of the cap head while having a diameter corresponding to that of the cap head.

4. The abutment of claim 3, wherein a plurality of protrusions are formed on the outer circumferential surface of the stabilizer at regular intervals along a circumferential direction.

5. The abutment of claim 1, wherein the cap includes nitinol.

6. The abutment of claim 2, wherein a plurality of protrusions are formed on an outer circumferential surface of the cap head, and grooves are recessed between the protrusions at a certain depth.

7. The abutment of claim 6, wherein, with the protrusion and the groove continuously connected, a longitudinal section shape of the protrusion comprises a first inclined part that obliquely extends in a direction of an upper portion of the cap head, a parallel extension that extends from the first inclined part in the direction of the upper portion of the cap head in parallel with the cap taper surface, and a second inclined part that extends to be rounded in a direction of the first inclined part from the parallel extension to the cap taper surface, and
a longitudinal section shape of the groove comprises a first extension that extends from the second inclined part with the same curvature as that of the second inclined part, a second extension that obliquely extends from the first extension in the direction of the upper portion of the cap head, and a third extension that obliquely extends from the second extension to the cap taper surface in the direction of the upper portion of the cap head with a shorter length than the second extension.

8. The abutment of claim 6, wherein, with the protrusion and the groove continuously connected, a longitudinal section shape of the protrusion comprises a first inclined part that obliquely extends in the direction of the upper portion of the cap head, a parallel extension that extends from the first inclined part in the direction of the upper portion of the cap head in parallel with the cap taper surface, and a second inclined part that extends to be rounded from the parallel extension to the cap taper surface toward the first inclined part, and
a longitudinal section shape of the groove comprises a first extension that extends from the second inclined part to be rounded with the same curvature as that of the second inclined part, a second extension that obliquely extends from the first extension in the direction of the upper portion of the cap head, and a third extension that obliquely extends from the second extension to the cap taper surface in the direction of the upper portion of the cap head with a longer length than the second extension.

9. The abutment of claim 1, comprising:
a connector that has a screw thread formed on an outer circumferential surface thereof and is threaded with a coupling hole of the base, and has a cap accommodating hole formed along a height direction of a central portion,
wherein the cap is inserted into and threaded with the cap accommodating hole.

10. The abutment of claim 9, wherein the connector comprises a head that has a head taper surface protruding from the upper portion of the base while the head taper surface is tapered to be narrow at an upper portion and wide at a lower portion, and
in the cap, an outer circumferential surface of the cap head protrudes from an upper portion of the connector while a cap taper surface tapered to be wide at an upper portion and narrow at a lower portion is formed to correspond to an inclination angle of the head taper surface.
